# EUROPEAN PATENT APPLICATION

(11) **EP 2 339 859 A2**
(43) Date of publication of application: **29.06.2011**
(21) Application number: 10194893.3
(22) Date of filing: 14.12.2010
(51) Int. Cl.: H04N 13/00

(54) **3D display driving method and 3D display apparatus using the same**

(30) Priority: 22.12.2009 KR 20090129026
(71) Applicant: SAMSUNG ELECTRONICS CO., LTD., Suwon-si Gyeonggi-do 442-742 (KR)
(72) Inventor: Seo, Min-suk, Songpa-gu (KR); Jung, Jong-hoon, Gyeonggi-do (KR); Park, Sang-moo, Gyeonggi-do (KR)
(74) Representative: Robinson, Ian Michael

(57) **Abstract**

A method for driving a 3D display and a display apparatus using the same are provided. The display apparatus includes a storage unit (490) to store a received image and a controlling unit (460) to drive a display by adjusting the brightness value using a first look-up table when the previous frame is different from the current frame and adjusting the brightness value using a second look-up table when the previous frame is the same as the current frame. According to the exemplary embodiment, an overdrive method may be applied to a 3D image display apparatus effectively.

## Description

### CROSS-REFERENCE TO RELATED APPLICATIONS

This application claims priority from Korean Patent Application No. 2009-129026, filed in the Korean Intellectual Property Office on December 22, 2009, the disclosure of which is incorporated herein by reference.

### BACKGROUND

### 1. Field

Apparatuses and methods consistent with the exemplary embodiments relate to a method for driving a three-dimensional (3D) display and a 3D display apparatus using the same, and more particularly to a method for driving a 3D display to provide high quality 3D image and a display apparatus using the same.

### 2. Description of the Related Art

In recent years, as the global trend of developing a large-sized televisions continues, users are now able to view images through larger screens. The trend towards larger televisions has been accelerated by the development of Thin Film Transistor Liquid Crystal Display (TFT LCD) and Plasma Display Panel (PDP), two leading products in flat panel display.

LCD is a display apparatus designed to obtain picture signal by applying an electric field to liquid crystal with anisotropy dielectric between two panels, and changing the alignment of the liquid crystal, which is made possible by adjusting the strength of the electric field and thus, the amount of light passing through the panels. LCD consumes less power compared to PDP and has lighter weight. However, it has longer response times because of the realignment of the liquid crystal.

To solve the above issues, an overdrive method is usually used because when overdrive voltage is applied in a frame transition period, response time is faster in the period, accelerating overall response time.

A 3D image provides stereoscopic effect using binocular disparity by outputting the right eye image and the left eye image alternately, which is a different way of outputting images from that of two-dimensional (2D) images. Consequently, when the same left eye images or the same right eye images are output continuously, the overdrive method may not be applied, and the characteristics of the liquid crystal may not be realized appropriately in an LCD with slow response time.

### SUMMARY OF THE EXEMPLARY EMBODIMENTS

An aspect of the exemplary embodiment relates to a method for driving a 3D display capable of preventing an undershoot effect which occurs when an overdrive method is used and a 3D display apparatus using the same.

Another aspect of the exemplary embodiment relates to a method for driving a 3D display cable of applying an overdrive method even when the same images are output in a LCD apparatus for displaying a 3D image and a 3D display apparatus using the same.

A display apparatus, according to an exemplary embodiment, comprises a storage unit to store a previous frame and a current frame of a received image, a display unit to display the received image, and a controlling unit to adjust a brightness value of the current frame using a first look-up table when the previous frame is not identical to the current frame, and to adjust a brightness value of the current frame using a second look-up table when the previous frame is identical to the current frame, and to drive the display using the adjusted brightness value.

The first look-up table may store adjustment brightness values to drive the display using an overdrive method.

The second look-up table may store adjustment brightness values to compensate undershoot which occurs when an overdrive method is used.

The image may be a 3D image in which two identical left eye frames and two identical right eye frames alternate.

The controlling unit, if the previous frame is identical to the current frame and the current frame is identical to a next frame, may not adjust a brightness value of the next frame.

A display driving method, according to an exemplary embodiment, comprises comparing a previous frame of a received image with a current frame, adjusting a brightness value of the current frame using a first look-up table if the previous frame is not identical to the current frame and adjusting a brightness value of the current frame using a second look-up table if the previous frame is identical to the current frame, and driving a display using the adjusted brightness value.

The first look-up table may store adjustment brightness values to drive the display using an overdrive method.

The second look-up table may store adjustment brightness values to compensate undershoot which occurs when an overdrive method is used.

The image may be a 3D image in which two identical left eye frames and two identical right eye frames alternates.

The adjusting, if the previous frame is identical to the current frame and the current frame is identical to a next frame, may not adjust a brightness value of the next frame.

The received image may be a 3D image.

The display apparatus may be a liquid crystal display (LCD).

### BRIEF DESCRIPTION OF THE DRAWINGS

FIG. 1 is a view illustrating the structure of a display apparatus according to an exemplary embodiment;

FIG. 2 is a view illustrating the pixel structure of a panel unit;

FIG. 3 is a view provided to explain a 3D image system according to an exemplary embodiment;

FIG. 4 is a block diagram illustrating the structure of a display apparatus according to an exemplary embodiment;

FIG. 5 is a view provided to explain a display method according to an exemplary embodiment;

FIG. 6 is a view provided to explain a display method according to an exemplary embodiment;

FIG. 7 is an example of a look-up table according to an exemplary embodiment; and

FIG. 8 is a graph to compare results according to an exemplary embodiment; and

FIG. 9 is a flow chart illustrating a display method according to an exemplary embodiment.

### DETAILED DESCRIPTION OF THE EXEMPLARY EMBODIMENTS

Certain exemplary embodiments are described in greater detail with reference to the accompanying drawings.

In the following description, like drawing reference numerals are used for the like elements, even in different drawings. The matters defined in the description, such as detailed construction and elements, are provided to assist in a comprehensive understanding of the exemplary embodiments. However, exemplary embodiments can be practiced without those specifically defined matters. Also, well-known functions or constructions are not described in detail since they would obscure the application with unnecessary detail.

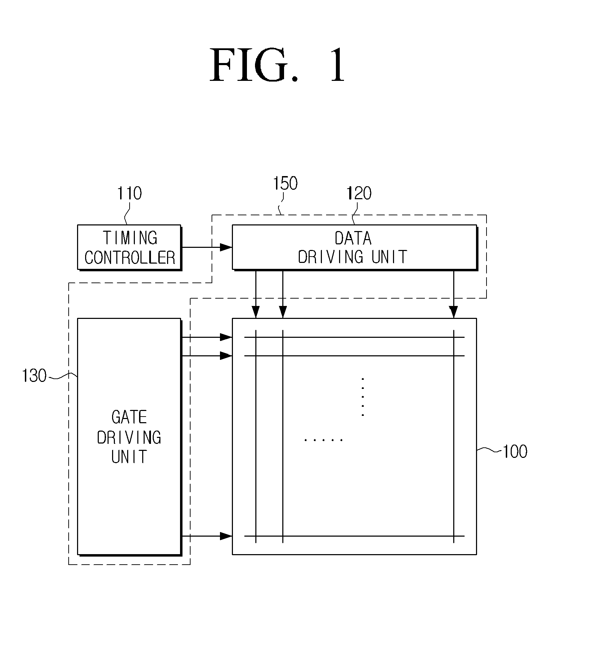

FIG. 1 is a view illustrating a display apparatus to which the exemplary embodiments are applicable. The present display apparatus outputs a 3D image which consists of alternate two left frames (referred to as 'L frame') and two right frames (referred to as 'R frame') in the order of L frame - L frame - R frame - R frame.

As illustrated in FIG. 1, the display apparatus comprises a panel unit 100, a timing controller 110, and a driving unit 150, which comprises a data driving unit 120 and a gate driving unit 130.

The panel unit 100 comprises a plurality of gate lines, a plurality of data lines, and a plurality of pixels formed where the gate lines and the data lines are crossed.

The data lines receive data voltage which is converted from gray-scale data by the data driving unit 120 which will be explained later, and apply the data voltage to the pixels.

The gate lines receive gate on-voltage from the gate driving unit 130 which will be explained later, and apply the gate on-voltage to the pixels.

The pixels are formed where the gate lines for applying on-voltage and the data lines for applying data voltage are crossed.

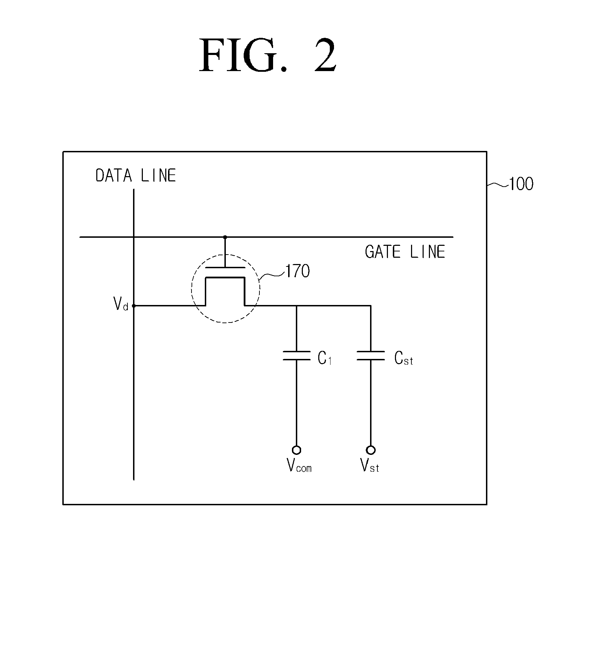

The pixels will be explained in detail with reference to FIG. 2. FIG. 2 is a view illustrating the structure of a pixel from among a plurality of pixels.

The pixels include a thin film transistor 170 which is connected to a source electrode and a gate electrode of the data line and gate line respectively, and a liquid capacitor (C1) and a storage capacitor (Cst) which are connected to the drain electrode of the thin film transistor 170.

If gate on-voltage is applied to the gate line and thus the thin film transistor 170 is turned on, the gate voltage (Vd) provided to the data line is applied to each of pixel electrodes through the thin film transistor 170. Subsequently, an electric field equivalent to the difference between the pixel voltage and the common voltage (Vcom) is applied to a liquid crystal, and light is transmitted with transmission coefficient corresponding to the strength of the electric field.

Referring back to FIG. 1, the timing controller 110 transmits a current frame to the driving unit 150 in order to drive the panel 100 as in the above description.

The timing controller 110 receives an external image signal and performs data processing. Specifically, the timing controller 110 receives red, green and blue (RGB) data, a data enable signal indicating frame timing, a sync signal, and a clock signal, and generates a control signal such as a start vertical signal (STV signal) and a gate clock signal (CPV signal). The STV signal is a vertical sync start signal for instructing the start of outputting gate on-voltage and the CPV signal is a signal for controlling output timing of gate on-voltage.

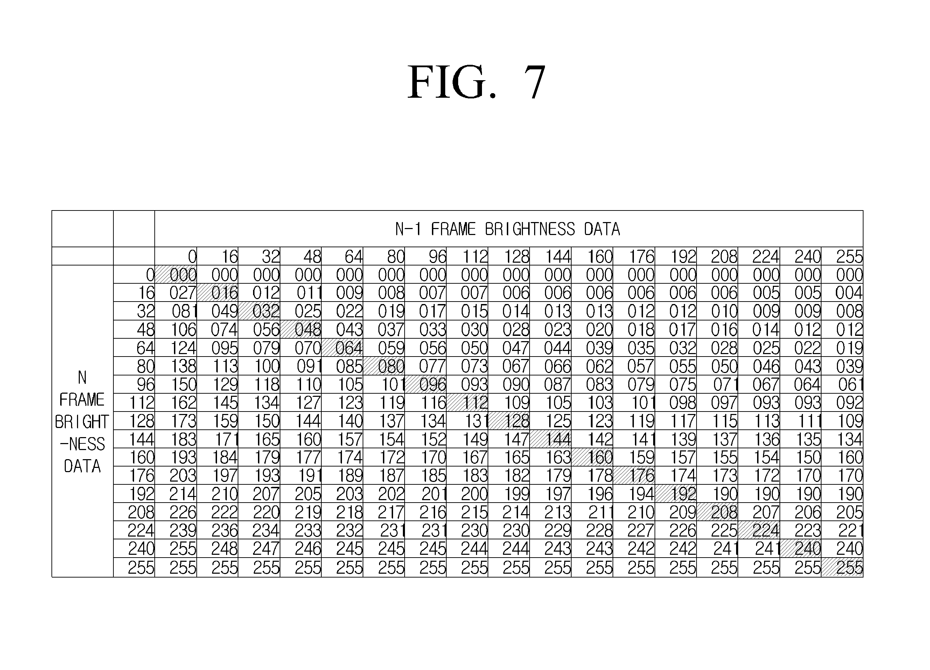

The timing controller 110 adjusts brightness value of a current frame using brightness data of the current frame and the previous frame. In particular, the timing controller 110 performs over-driving by referring to a look-up table which varies depending on whether the current frame is identical to the previous frame. The look-up table is pre-determined data for adjusting brightness value. The look-up table will be explained later with reference to FIG. 7.

The driving unit 150 comprises a data driving unit 120 and a gate driving unit 130. The data driving unit 120 converts data of the frame received from the timing controller 110 into voltage and applies the voltage to each data line, and the gate driving unit 130 applies gate on-voltage to the gate line consecutively and turns on the thin film transistor 170 in which the gate electrode is connected to the gate line to which the gate on-voltage is applied.

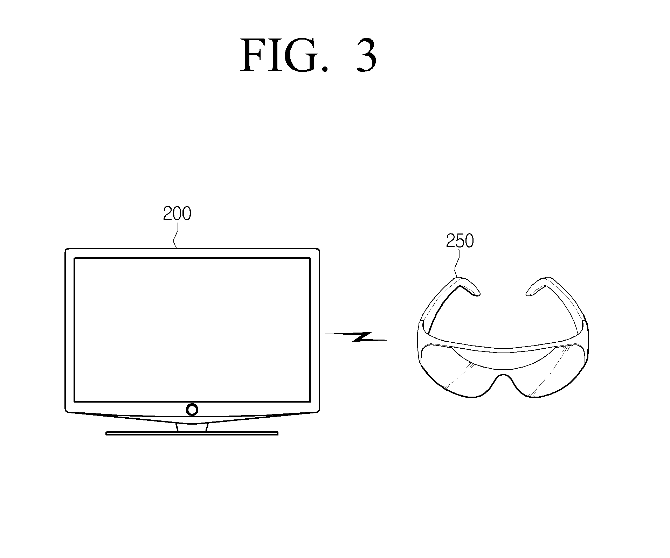

FIG. 3 is a view provided to explain a 3D image system according to an exemplary embodiment. The 3D image system comprises a 3D display 200 and 3D glasses 250, and the 3D display 200 is communicable with the 3D glasses 250.

The 3D display 200 displays a left eye frame and a right eye frame alternately, and a user may view a 3D image by watching the left eye frame and the right eye frame displayed on the 3D display 200 with the left eye and the right eye alternately using the 3D glasses 250.

In this case, the 3D display 200 is synchronized with the 3D glasses 250, and thus when the left eye frame is output on the 3D display 200, the left shutter of the 3D glasses 250 is open and the right shutter is closed, and when the right eye frame is output on the 3D display 200, the left shutter is closed and the right shutter is open. Therefore, a user may view the 3D image.

The LCD display apparatus, according to an exemplary embodiment, outputs a 3D image which consists of alternate two left frames (referred to as 'L frame') and two right frames (referred to as 'R frame') in the order of L frame - L frame - R frame - R frame.

In this case, an overdrive method is used to make up for the slow response time of LCD. Specifically, the overdrive method is a driving method in which a brightness value of a current frame increases if the brightness value of the previous frame is lower than the brightness value of the current frame and the brightness value of the current frame decreases if the brightness value of the previous frame is higher than the brightness value of the current frame.

However, the overdrive method cannot be applied when a 3D image consisting of L frame - L frame - R frame - R frame - L frame - L frame - R frame - R frame ... is output since the same frame is input twice in a row. That is, if L frame is applied again after L frame is applied, the brightness of the previous frame is the same as the brightness value of the current frame. Therefore, the overdrive method cannot be applied, and thus the slow response time of the liquid crystal cannot be compensated.

However, according to the exemplary embodiment, the overdrive is applied by referring to a different look-up table if the same frame is output, and thus slow response time of liquid crystal can be compensated. That is, if it is determined that the previous frame is not identical to the current frame, the overdrive is applied using the first look-up table, and if it is determined that the previous frame is identical to the current frame, the overdrive is applied using the second look-up table. Therefore, slow response time of the liquid crystal may be compensated in any case.

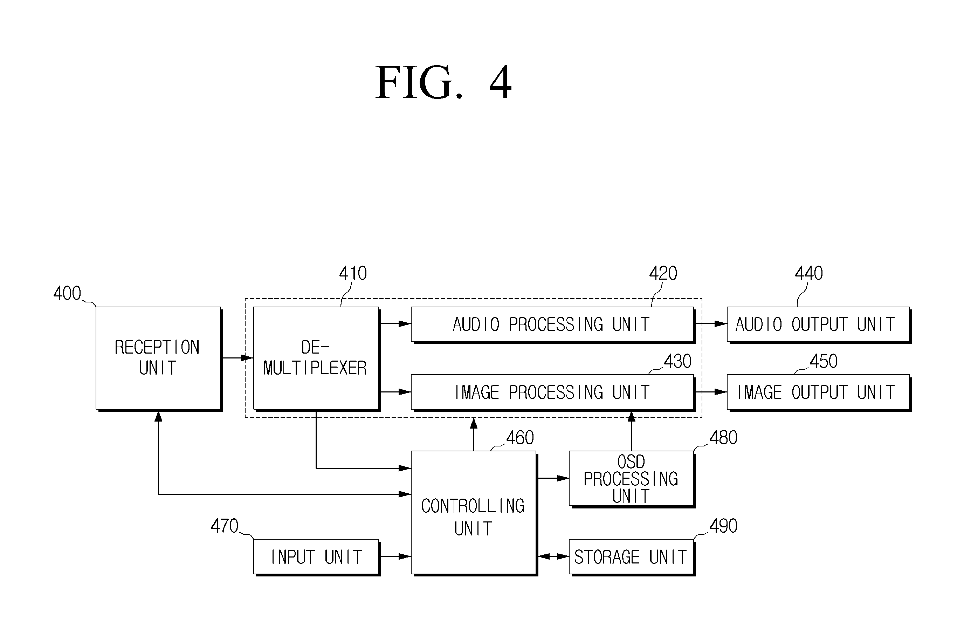

FIG. 4 is a block diagram illustrating the structure of a display apparatus according to an exemplary embodiment.

Referring to FIG. 4, the 3D image display apparatus comprises a reception unit 400, a de-multiplexer 410, an audio processing unit 420, an image processing unit 430, an audio output unit 440, an image output unit 450, a controlling unit 460, an input unit 470, an on-screen-display (OSD) processing unit 480, and a storage unit 490.

The reception unit 400 provides a 3D image, which is received wirelessly or via a wired connection, to the de-multiplexer 410. Specifically, the 3D image which is received wirelessly from a 3D image provider or via a wired connection from a DVD or a set-top box, is transmitted to the de-multiplexer 410.

The de-multiplexer 410 divides a broadcast signal output from the reception unit 400 into an image signal and an audio signal and outputs them into the audio processing unit 420 and the image processing unit 430 respectively.

The audio processing unit 420 decodes the audio signal divided by the de-multiplexer 410, converts it into an audio signal in a format which can be output in the audio output unit 440, and provides it to the audio output unit 440. Meanwhile the image processing unit 430 decodes the image signal divided by the de-multiplexer 410, converts it into an image signal in a format which can be output in the image output unit 450, and provides it to the image output unit 450.

The audio output unit 440 outputs the audio signal received from the audio processing unit 420 and the image output unit 450 outputs the image signal received from the image processing unit 430. In particular, the image output unit 450 provides a user with a stereoscopic image by outputting the left image and the right image of the decoded image alternately.

The input unit 470 generates an input command based on a user's manipulation and provides it to the controlling unit 460. The signal input to the input unit 470 may be a signal which the user inputs through a key pad incorporated into the display apparatus or a signal which the user inputs through a remote controller which is separated from the main body of the display apparatus. However, the input signal is not limited thereto.

The OSD processing unit 480 processes an OSD menu to be displayed or requests an input signal from a user through the OSD menu.

The controlling unit 460 controls the reception unit 400 to receive a 3D image or controls the de-multiplexer 410, the audio processing unit 420 and the image processing unit 430 to divide and encrypt the received 3D image. In addition, the controlling unit 460 controls the reception unit 400, the audio processing unit 420, the image processing unit 430, and the OSD processing unit 480 according to the input signal input through the input unit 470 by a user.

In particular, the controlling unit 460 controls the timing controller 110, the driving unit 150, and the panel unit 100 illustrated in FIG. 1 to adjust a brightness value using a look-table which differs depending on whether the previous data is identical to the current data or not.

The storage unit 490 stores the received 3D image temporarily, and the controlling unit 460 determines whether the previous frame is identical to the current frame based on the 3D image stored in the storage unit 490. In addition, the storage unit 490 serves as a storage when an audio signal is processed in the audio processing unit 420 and an image signal is processed in the image processing unit 430.

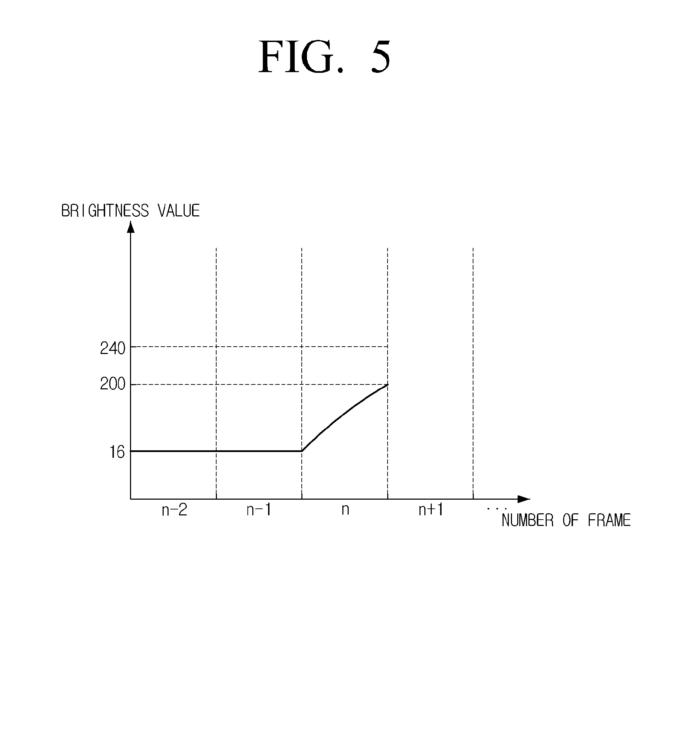

Hereinbelow, a method for driving a display will be explained with reference to FIG. 5 to FIG. 8.

FIG. 5 shows the brightness value of a frame to which the overdrive is not applied. In FIG. 5, a target brightness value is set to be 240. Although the target brightness value of the current frame (n) is 240, the actual brightness value while the current frame is being output is just 200 due to slow response time. The target brightness value is a brightness value to be displayed on the screen after brightness adjustment, the actual brightness value is a brightness value to be actually displayed on the screen regardless of adjustment. The adjusted brightness value is a brightness value adjusted through the overdrive method.

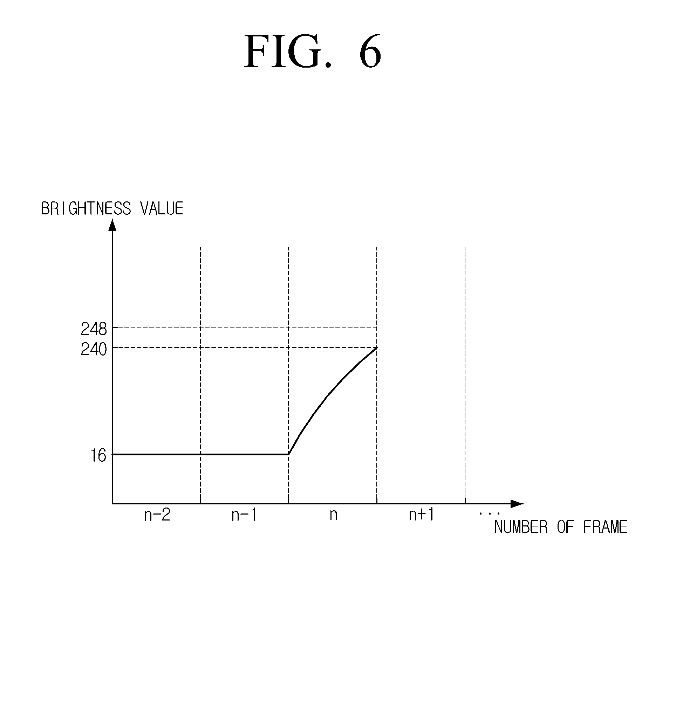

FIG. 6 shows the adjusted brightness value. Referring to the look-up table illustrated in FIG. 7, the brightness value of the previous frame is 16 and the target brightness value of the current frame is 240, and thus the adjusted brightness value becomes 248. If the overdrive method is applied, the brightness value of the current frame becomes 240, which is the target brightness value.

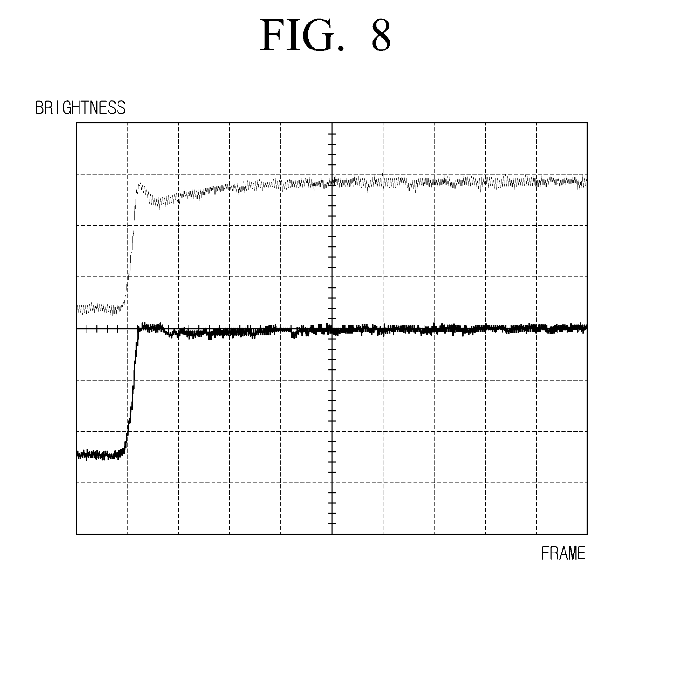

The graph in FIG. 8 shows the result of applying the overdrive method. In FIG. 8, the upper graph shows the result when a related art overdrive method is applied, and the lower graph shows the result when the technical feature of the exemplary embodiments are applied.

In the upper graph, the overdrive method is applied and the target brightness value is achieved quickly. However, the display apparatus of the exemplary embodiment outputs in the order of L frame -> L frame or R frame -> R frame, and thus the overdrive method is not applied to the second frame since the brightness value of the previous frame is the same as that of the current frame. Accordingly, an undershoot effect occurs since the brightness value is less than the target brightness value. The upper graph in FIG. 8 shows that the target brightness value is achieved quickly as the overdrive method is applied but the brightness is reduced temporarily due to the undershoot effect.

If the previous frame is identical to the current frame as in the exemplary embodiment, and the overdrive method is applied, the target brightness value is maintained even though the frame is changed as the target brightness value is achieved as in the lower graph of FIG. 8.

However, if the previous frame is identical to the current frame, the overdrive method is applied again in order to compensate for the undershoot effect, and thus a look-up table which is different from that used when the previous frame is not identical to the current frame is used.

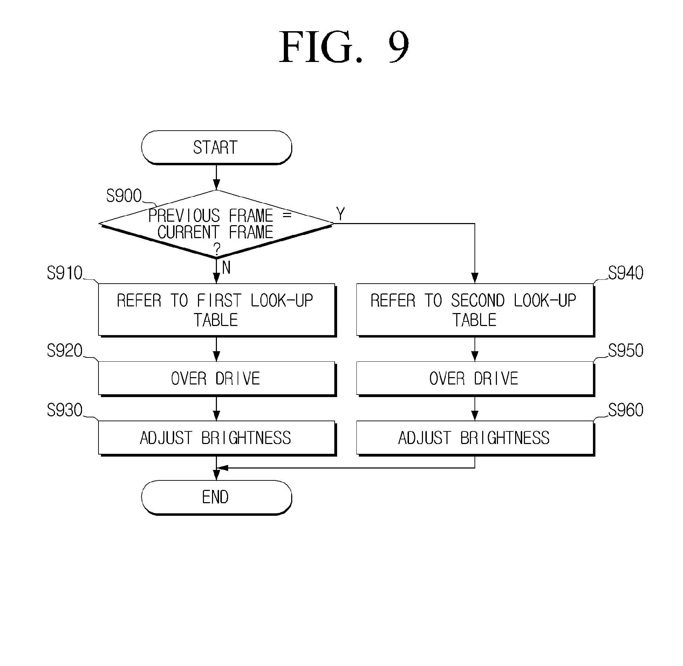

Hereinbelow, a method for driving a display according to an exemplary embodiment will be described with reference to FIG. 9.

First of all, it is determined whether the current frame is identical to the previous frame (operation S900). If it is determined that the current frame is not identical to the previous frame, the overdrive method is applied (operation 920) by referring to the first look-up table (operation S910). That is, a brightness adjustment value which achieves a target brightness value, is determined using the first look-up table by referring to the brightness value of the current frame and the brightness value of the previous frame, and the brightness is adjusted by applying the determined brightness adjustment value so that the brightness of the current frame has the target brightness value (operation S930).

The brightness may be adjusted using the first look-up table when frames are output in the order of L frame -> R frame or R frame -> L frame.

If it is determined that the current frame is identical to the previous frame, the overdrive method is applied (operation S950) using the second look-up table (operation S940). That is, a brightness adjustment value which achieves a target brightness value is determined using the second look-up table by referring to the brightness value of the current frame and the brightness value of the previous frame, and the brightness is adjusted by applying the determined brightness adjustment value so that the brightness of the current frame has the target brightness value (operation S960).

The brightness may be adjusted using the second look-up table when frames are output in the order of L frame -> L frame or R frame -> R frame.

According to the exemplary embodiment, the method for driving a 3D display and the 3D display apparatus using the same may prevent the characteristics of the liquid crystal from being deteriorated when the overdrive method is not applied or undershoot effect occurs.

Although a few exemplary embodiments have been shown and described, it would be appreciated by those skilled in the art that changes may be made in the exemplary embodiments without departing from the principles of the exemplary embodiments, the scope of which is defined in the claims and their equivalents.

## Claims

1. A display apparatus, comprising:
a storage unit which stores a previous frame of a received image and a current frame of the received image;
a display unit which displays the received image; and
a controlling unit which adjusts a brightness value of the current frame using a first look-up table when the previous frame is not identical to the current frame, and adjusts a brightness value of the current frame using a second look-up table when the previous frame is identical to the current frame, and drives the display unit using the adjusted brightness value.

2. The display apparatus according to claim 1, wherein the first look-up table stores brightness adjustment values to drive the display unit using an overdrive method.

3. The display apparatus according to claim 1 or 2, wherein the second look-up table stores brightness adjustment values to compensate for undershoot which occurs when an overdrive method is used.

4. The display apparatus according to any one of claim 1 to 3, wherein the received image is a three-dimensional (3D) image in which two identical left eye frames and two identical right eye frames alternate.

5. The display apparatus according to any one of claim 1 to 4, wherein the controlling unit, if the previous frame is identical to the current frame and the current frame is identical to a next frame, does not adjust a brightness value of the next frame.

6. The display apparatus according to any one of claim 1 to 5, wherein the received image is a 3D image.

7. The display apparatus according to any one of claim 1 to 6, wherein the display apparatus is a liquid crystal display (LCD).

8. A display driving method, comprising:
receiving an image;
comparing a previous frame of the received image with a current frame of the received image;
adjusting a brightness value of the current frame using a first look-up table if the previous frame is not identical to the current frame, and adjusting a brightness value of the current frame using a second look-up table if the previous frame is identical to the current frame; and
driving a display unit using the adjusted brightness value.

9. The display driving method according to claim 8, wherein the first look-up table stores brightness adjustment values to drive the display using an overdrive method.

10. The display driving method according to claim 8 or 9, wherein the second look-up table stores brightness adjustment values to compensate for undershoot which occurs when an overdrive method is used.

11. The display driving method according to any one of claim 8 to 10, wherein the image is a three-dimensional (3D) image in which two identical left eye frames and two identical right eye frames alternate.

12. The display driving method according to any one of claim 8 to 11, wherein if the previous frame is identical to the current frame and the current frame is identical to a next frame, a brightness value of the next frame is not adjusted.
